# EUROPÄISCHE PATENTANMELDUNG

(11) **EP 4 656 351 A1**
(43) Veröffentlichungstag der Anmeldung: **03.12.2025**
(21) Anmeldenummer: 24187769.5
(22) Anmeldetag: 10.07.2024
(51) Int. Cl.: B29C 45/33

(54) **SPRITZGIESSWERKZEUG UND SPRITZGIESSMASCHINE MIT DIESEM SPRITZGIESSWERKZEUG**

(30) Priorität: 31.05.2024 EP 24179280
(71) Anmelder: Haidlmair Holding GmbH, 4542 Nussbach (AT)
(72) Erfinder: Pichler, Andreas, 4565 Inzersdorf (AT)
(74) Vertreter: Jell, Friedrich

(57) **Zusammenfassung**

Es wird ein Spritzgießwerkzeug (1) und eine Spritzgießmaschine mit diesem Spritzgießwerkzeug (1) gezeigt. Um ein kompaktes Spritzgießwerkzeug (1) zu schaffen, wird vorgeschlagen, dass die Formbacke (5) einen die Werkzeugwirkfläche (8) aufweisenden, insbesondere ausbildenden, Schieber (11) und eine, insbesondere lineare, Schieberführung (12) aufweist, an der der Schieber (11) an der Formbacke (5) zur Bewegung der Werkzeugwirkfläche (8) in einer Nebenentformungsrichtung (13b) des Spritzgießwerkzeugs (1) beweglich gelagert ist, und dass das Spritzgießwerkzeug (1) zumindest eine Kulissenführung (14) zwischen Stützelement (9) und Schieber (11) zu dessen Bewegung entlang der Schieberführung (12) aufweist.

## Beschreibung

Zum Entformen eines Spritzgießteils mit zumindest einem Hinterschnitt aus einem Spritzgießwerkzeug ist es bekannt, zumindest eine bewegliche Formbacke, die die Kavität zumindest abschnittsweise begrenzt, an einer Werkzeughälfte des Spritzgießwerkzeugs vorzusehen. Damit kann beim Entformen des Spritzgießteils die Werkzeugwirkfläche an der Formbacke vom Spritzgießteil entfernt und das Spritzgießteil freigegeben werden, wenn das Spritzgießwerkzeug in seine Hauptentformungsrichtung geöffnet wird. Die Beweglichkeit der Formbacke wird über eine Backenführung des Spritzgießwerkzeugs erreicht, die zwischen der Formbacke und einem Stützelement des Spritzgießwerkzeugs vorgesehen ist. Dieses Stützelement ist an einer Formplatte des Spritzgießwerkzeugs befestigt. Bei komplexen Hinterschnitten bedarf es für die Formbacke einer erhöhten Beweglichkeit, was nicht nur den konstruktiven Aufwand am Spritzgießwerkzeug erhöht, sondern auch zu einem höheren Verschleiß und damit zu einer verminderten Standfestigkeit führen kann.

Zudem steigt auch die Beschädigungsgefahr, sei es am Spritzgießteil und/oder am Spritzgießwerkzeug, bei weiten Verfahrenswegen des Hinterschnitts gegenüber dem Spritzgießteil, wenn dieses entformt wird.

Die Erfindung hat sich daher ausgehend vom Eingangs geschilderten Stand der Technik die Aufgabe gestellt, unabhängig von der Komplexität des Hinterschnitts am Spritzgießwerkzeug konstruktive Einfachheit und Standfestigkeit zu gewährleisten.

Die Erfindung löst die gestellte Aufgabe durch die Merkmale des Anspruchs 1.

Indem die Formbacke einen die Werkzeugwirkfläche aufweisenden, insbesondere ausbildenden, Schieber und eine, insbesondere lineare, Schieberführung aufweist, an der der Schieber an der Formbacke zur Bewegung der Werkzeugwirkfläche, insbesondere in einer Nebenentformungsrichtung, des Spritzgießwerkzeugs beweglich gelagert ist, kann erfindungsgemäß der Grad an Bewegungsfähigkeit der Formbacke gegenüber der Formplatte des Spritzgießwerkzeugs auch bei vergleichsweise komplexen Hinterschnitten am Spritzgießteils gering gehalten bleiben. Über die Bewegung des Schiebers, der die Werkzeugwirkfläche aufweist, können nämlich selbst komplexe Hinterschnitten, wie diese beispielsweise bei Kisten mit vergleichsweise tiefen Doppelböden der Fall sein kann, entformt werden, ohne damit den Formbacken weit verfahren zu müssen. Aufwendige Backenführungen können sohin vermieden werden, was zudem der Standfestigkeit des Spritzgießwerkzeugs zugutekommen kann.

Eine bewegliche Lagerung des Schiebers an der Formbacke ist zudem unkompliziert. Dies unter anderem dadurch, dass das Spritzgießwerkzeug zumindest eine Kulissenführung zwischen Stützelement und Schieber zu dessen Bewegung entlang der Schieberführung und damit relativ zur Formbacke aufweist. Denn damit kann die Bewegung der Formbacke entlang der Backenführung zur Steuerung der Bewegung des Schiebers relativ zur Formbacke verwendet werden. Zudem ist eine Kulissenführung besonders standfest und kann auch für eine präzise Entfernung der Werkzeugwirkfläche aus dem Hinterschnitt am Spritzgießteils sorgen, was Beschädigungen beim Entformen -sei es am Spritzgießteil und/oder am Spritzgießwerkzeug- verhindert und damit zu einer hohen Standfestigkeit des Spritzgießwerkzeugs führen kann.

Vorzugsweise weist die Kulissenführung einen schieberseitigen Kulissenstein und eine stützelementseitige Kulisse mit einer Kulissenbahn auf, in der der Kulissenstein zur Bewegung des Schiebers entlang der Schieberführung geführt ist. Dies kann eine genaue und kontrollierte Führung des Kulissensteins und somit des Schiebers ermöglichen.

Ist die Kulissenbahn langgestreckt, kann dies beispielsweise größere Bewegungslängen des Schiebers ermöglichen. Auch kann damit eine längere Kontaktfläche zwischen dem Kulissenstein und der Kulissenbahn ermöglicht werden, womit eine gleichmäßigere Kraftübertragung über die gesamte Länge der Bewegung erreicht werden kann. Somit können unter anderem mechanische Belastungen auf die Kulisse, Schieber und/oder Schieberführung reduziert werden, was die Standfestigkeit des Spritzgießwerkzeugs weiter erhöhen kann.

Definieren zwei gegenüberliegende Längsränder eine, insbesondere einseitig offene, Kulissenbahn, kann dies den Kulissenstein vor Verschmutzung und damit erhöhten Abrieb in der Kulissenführung verbessert schützen, was zu einer längeren Standfestigkeit und auch Zuverlässigkeit des Spritzgießwerkzeugs beitragen kann.

Vorzugsweise weist die Kulissenbahn mehrere zueinander geneigt verlaufende Bahnabschnitte auf, um damit entsprechend deren Neigung die Bewegung des Schiebers unterschiedlich steuern zu können.

Beispielsweise verläuft von den Bahnabschnitten ein erster, insbesondere horizontal gesehen unterster, Bahnabschnitt parallel zur Führungsrichtung der Backenführung und ein horizontal gesehen darüberliegender zweiter, insbesondere direkt an den ersten Bahnabschnitt anschließender, Bahnabschnitt zu dieser Führungsrichtung geneigt und von der Formbacke weg gerichtet verläuft, um damit die Werkzeugwirkfläche, insbesondere in der Nebenentformungsrichtung, zu bewegen. Damit kann beim Öffnen des Spritzgießwerkzeugs in Hauptentformungsrichtung zunächst der Schieber in dessen Lage unverändert mit der Formbacke mitbewegt werden. Dies stellt eine gleichmäßige Belastung auf das Spritzgießteil am Anfang des Entformens sicher. Nach dieser Anfangsphase kann der Schieber mit erhöhter Rückzugsgeschwindigkeit aus dem Hinterschnitt am Spritzgießteil entfernt werden. Damit kann die Bewegung der Backen zum Entformen gering bleiben - Beschädigungen durch erhöhte Entformungskräfte wirken dabei nicht auf das Spritzgießteil, was beschädigungsfreie Spritzgießteile sicherstellen kann.

Die Konstruktion im Bereich der Kulissenführung kann beispielsweise vereinfacht werden, indem die Bahnabschnitte gerade verlaufen.

Vorzugsweise weist die Schieberführung eine an der Formbacke vorgesehene Schieberführungsleiste auf, an der der Schieber verschiebbar gelagert ist, um damit eine präzise und genaue Bewegung des Schiebers beim Entformen des Spritzgießteils zu ermöglichen. Dies stellt beschädigungsfreie Spritzgießteile sicher.

Die Backenführung kann beispielsweise konstruktiv einfach ausgebildet werden, wenn diese Backenführung zumindest eine Gleitführung, insbesondere mehrere parallel verlaufende Gleitführungen, aufweist. Diese Gleitführungen können beispielsweise parallel verlaufen und/oder kann die Gleitführung als T-Führung ausgebildet sein.

Vorzugsweise ist seitlich neben der Backenführung jeweils eine Kulissenführung angeordnet, um damit selbst bei vergleichsweise großen Vorsprüngen eine präzise und genaue Führung beim Entformen zu ermöglichen. Zudem kann dies durch Kraftaufteilung auf zwei Kulissenführungen die Standfestigkeit des Spritzgießwerkzeugs weiter erhöhen.

Die Bauverhältnisse am Spritzgießwerkzeug können weiter verringert werden, wenn die Backenführung der Formplatte schräg zuläuft.

Diese unter anderem auch, wenn sich die Schieberführung normal zur Hauptentformungsrichtung des Spritzgießwerkzeugs längserstreckt.

Vorzugsweise weist das Spritzgießwerkzeug vier Formbacken und vier Stützelemente auf, die je eine Formbacke der Formbacken mit einer Backenführung beweglich lagern, um beispielsweise die Konstruktion des Spritzgießwerkzeugs weiter zu vereinfachen. Dies insbesondere, wenn die vier Formbacken um die Kavität geschlossen angeordnet sind.

Das Spritzgießwerkzeug kann weiter konstruktiv vereinfacht werden, wenn die vier Backenführungen beispielsweise einen gleichen Innenwinkel zur Formplatte aufweisen.

Der Schieber bzw. damit die Werkzeugwirkfläche kann bei geschlossenem Spritzgießwerkzeug standfest in der Beweglichkeit eingeschränkt werden, wenn beispielsweise das Spritzgießwerkzeug zumindest einen Anschlag aufweist, an den der Schieber bei geschlossenem Spritzgießwerkzeug anschlägt.

Diese Einschränkung kann in zumindest einem Freiheitsgrad oder auch eine Arretierung (in allen Freiheitsgraden) der Schieberführung sein. Dies, indem ein erster Anschlag des zumindest einen Anschlags stützelementseitig und/oder ein zweiter Anschlag des zumindest einen Anschlags formbackenseitig vorgesehen ist oder sind.

Zudem kann solch ein Anschlag auf für eine exakte Positionierung der Werkzeugwirkfläche

Vorzugsweise weist der erste Anschlag eine Anschlagfläche auf, die unter einem spitzen, insbesondere 70 Grad aufweisenden, Innenwinkel β relativ zur Führungsachse der Schieberführung verläuft und/oder weist der zweite Anschlag eine Anschlagfläche aufweist, die normal relativ zur Führungsachse der Schieberführung verläuft. Eine standfeste Einschränkung der Beweglichkeit des Schiebers bei geschlossenem Spritzgießwerkzeug kann so geschaffen werden, die sich auch bei einem Öffnen des Spritzgießwerkzeug leichtgängig aufheben lässt.

Vorzugsweise eignet sich das erfindungsgemäße Spritzgießwerkzeug für eine Spritzgießmaschine besonders.

Die Erfindung hat sich zudem die Aufgabe gestellt, ein Verfahren zu schaffen, mit dem zuverlässig formgenaue Spritzgießteile hergestellt werden können.

Die Erfindung löst die gestellte Aufgabe durch die Merkmale des Anspruchs 15.

Indem beim Entformen des Spritzgießteils der Schieber an der Formbacke mithilfe einer Kulissenführung zwischen Schieber und Stützelement bewegt wird, welches Stützelement die Formbacke beweglich lagert, kann reproduzierbar und standfest ein formgenaues Spritzgießteil hergestellt werden.

In den Figuren ist beispielsweise der Erfindungsgegenstand anhand eines Ausführungsbeispiels näher dargestellt. Es zeigen
- Fig. 1: eine Schnittansicht durch einen Teil eines geschlossenen Spritzgießwerkzeugs,
- Fig. 1a: eine Detailansicht der Fig. 1,
- Fig. 1b: eine Detailansicht der Fig. 1, jedoch in einem zur Fig. 1 parallelversetzten Schnitt,
- Fig. 2: die Schnittansicht nach Fig. 1 beim offenen Spritzgießwerkzeugs und
- Fig. 3: eine Draufsicht auf das nach Fig.1 dargestellte Spritzgießwerkzeug.

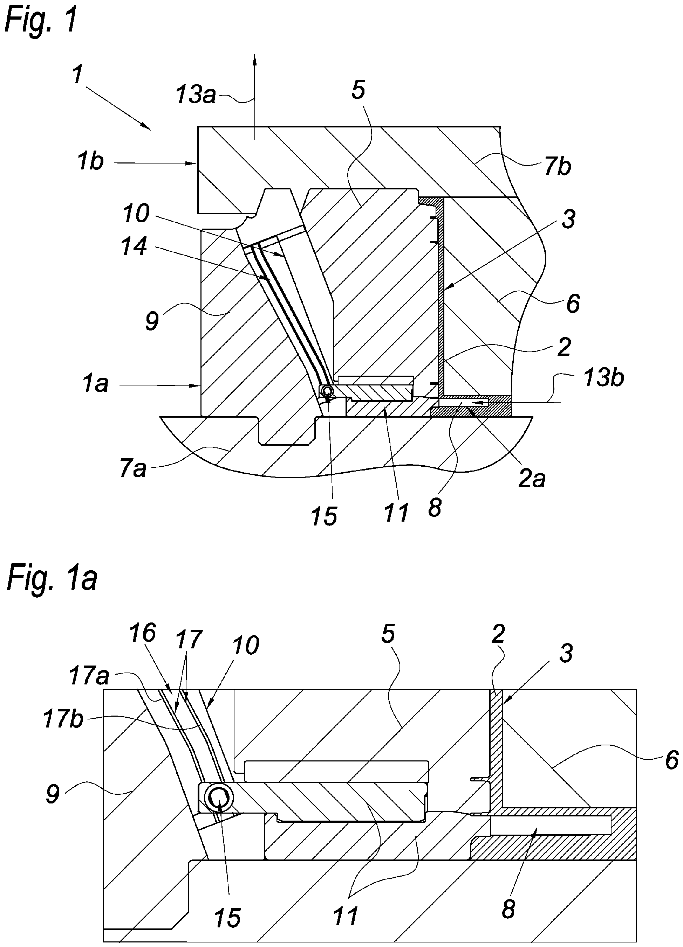

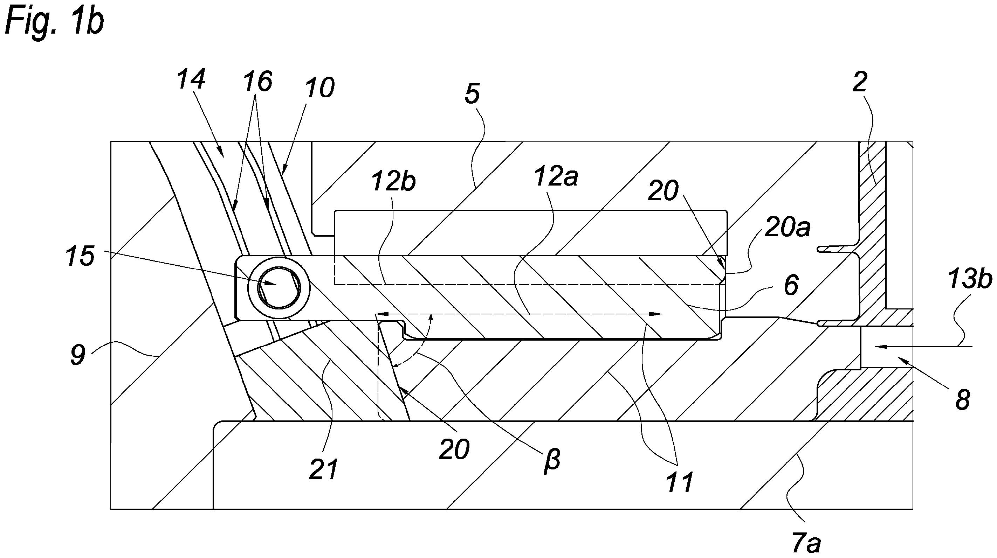

Nach Fig. 1 ist ein Teil eines geschlossenen Spritzgießwerkzeugs 1 einer nicht näher darstellen Spritzgießmaschine in einem Querschnitt dargestellt. Das Spritzgießwerkzeug 1 dient zur Herstellung eines Spritzgießteils 2, das einen Hinterschnitt 2a aufweist. Hierzu weist das Spritzgießwerkzeug 1 eine Kavität 4 auf, in dem sich das Spritzgießteils 2 bei geschlossenem Spritzgießwerkzeug 1 ausbilden kann. Die Kavität 4 wird von verschiedenen Teilen des Spritzgießwerkzeugs 1 ausgebildet. So weist hierzu das Spritzgießwerkzeug 1, das sich aus zwei öffnen- und schließbaren Formhälften 1a, 1b zusammensetzt, an einer Formhälfte 1a eine Formplatte 7a und vier Formbacken 5 und an der anderen Formhälfte 1b einen Kern 6 und eine weitere Formplatte 7b auf.

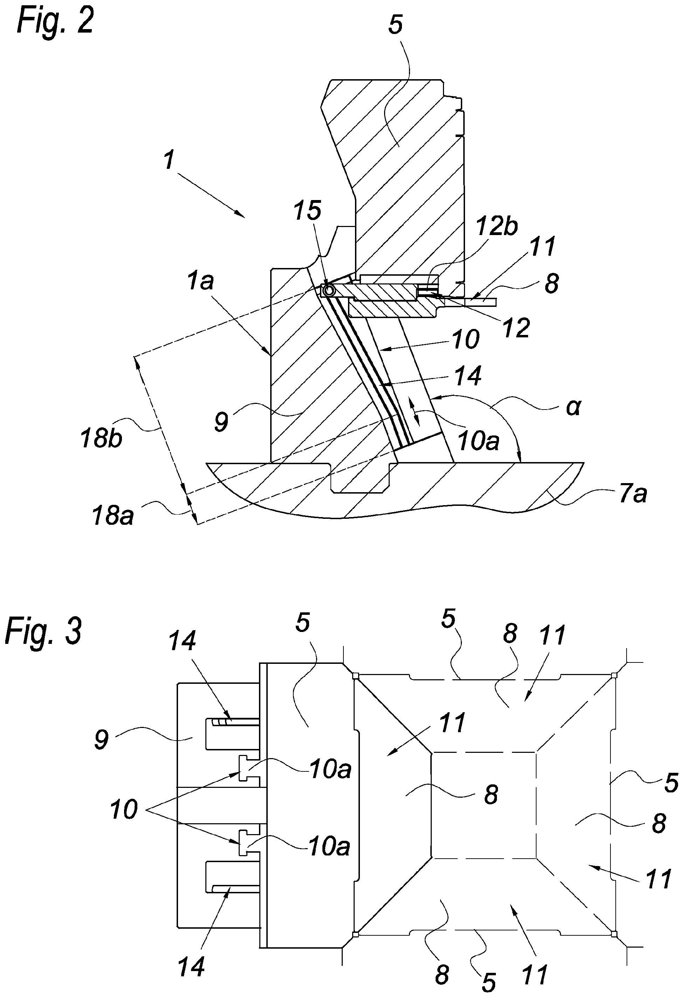

Der Einfachheit halber ist anstelle der anderen Formbacken 5 nur eine Formbacke 5 in den Figuren 1 bis 3 dargestellt. In Fig. 3 sind alle vier Formbacken 5 samt deren Schieber 11 mit beispielsweise vorspringenden Werkzeugwirkflächen 8 zu erkennen, wobei drei davon strichliert dargestellt sind. Nicht dargestellt, aber vorstellbar ist zudem, dass die Kavität 4 allein von den vier Formbacken 5 ausgebildet wird und es sich dann um ein Backenwerkzeug als Spritzgießwerkzeugs 1 handelt.

Die Formbacken 5 weisen je eine vorspringende Werkzeugwirkfläche 8 auf, die am Boden des als Kasten ausgebildeten Spritzgießteils 2 den Hinterschnitt 2a ausbilden.

Die Formbacken 5 sind über je ein Stützelement 9 des Spritzgießwerkzeugs 1 an der ersten Formhälfte 1a beweglich gelagert. Hierzu weist das Spritzgießwerkzeug 1 lineare Backenführungen 10 auf, die jeweils zwischen dem Stützelement 9 und der Formbacke 5 vorgesehen sind.

Um die Bewegung der Formbacken 5 beim Entformen zu verringern und damit die Standfestigkeit des Spritzgießwerkzeugs 1 zu verbessern, weisen die Formbacken 5 jeweils einen mehrteiligen Schieber 11 auf, der die Werkzeugwirkfläche 8 -wie beispielsweise dargestellt- auswechselbar aufweist. Der Schieber 11 ist zudem gegenüber der jeweiligen Formbacke 5 linear beweglich und damit gegenüber dieser Formbacke 5 relativ gelagert. Hierzu weist die Formbacke 5 eine Schieberführung 12 mit einer Führungsachse 12a auf, wie in Fig. 1a im Schnitt dargestellt. Damit ist der Schieber 11 in eine zu einer Hauptentformungsrichtung 13a normalen Nebenentformungsrichtung 13b nach Fig. 1 bewegbar. Dies erleichtert das Entformen des Spritzgießteils 2 vom Spritzgießwerkzeug 1 erheblich und stellt auch sicher, dass bei diesem Entformen Beschädigungsfreiheit besteht, wie dies nach Fig. 2 erkannt werden kann.

Hier ist das Spritzgießwerkzeugs 1 in seiner offenen Lage dargestellt. Zu erkennen ist, dass die Werkzeugwirkfläche 8 deutlich gegenüber seiner Lage am nach Fig. 1 geschlossenen Spritzgießwerkzeug 1 zurückgezogen ist.

Zur Betätigung des Schiebers 11 entlang der Schieberführung 12 weist das Spritzgießwerkzeug 1 zumindest eine Kulissenführung 14 auf. Die Kulissenführung 14 ist zwischen dem betreffenden Stützelement 9 und Schieber 11 vorgesehen. Wird nun beim Öffnen des Spritzgießwerkzeugs 1 die Formbacke 5 entlang der Backenführung 10 bewegt, steuert die Kulissenführung 14 die Bewegung des Schieber 11 relativ zur Formbacke 5.

Hierfür weist die Kulissenführung 14 einen schieberseitigen Kulissenstein 15 und eine stützelementseitige Kulisse 16 mit einer Kulissenbahn 17 auf. Werden beim Öffnen des Spritzgießwerkzeugs 1 die Backen in Hauptentformungsrichtung 13a bewegt, dann gleitet der Kulissenstein 15 entlang der Kulissenbahn 17 und bewegt damit den Schieber 11 in die Nebenentformungsrichtung 13b.

Der Einfachheit halber in der Konstruktion ist die Kulissenbahn 17 langgestreckt und weist zwei gegenüberliegende Längsränder 17a, 17b auf, die eine einseitig offene Kulissenbahn 17 definieren. Durch diese einseitig offene Kulissenbahn 17 sind Wartungsarbeiten einfach vorzunehmen.

Wie zudem der Fig. 2 im Detail zu entnehmen, weist die Kulissenbahn 17 mehrere zueinander geneigt verlaufende Bahnabschnitte 18a, 18b auf. Hiervon ist der erste Bahnabschnitt 18a horizontal gesehen der Unterste der Bahnabschnitte 18a, 18b. Dieser erste Bahnabschnitt 18a verläuft parallel zur Führungsrichtung 10a der Backenführung 10. Damit bewegt sich der Schieber 11 am Anfang des Entformens nicht gegenüber der Formbacke 5, was das Entformen des Spritzgießteils 2 erleichtert. Der zweite an diesem ersten Bahnabschnitt 18a anschließende zweite Bahnabschnitt 18b, der damit horizontal gesehen über dem ersten Bahnabschnitt 18a liegt, verläuft zu dieser Führungsrichtung 10a geneigt und von der Formbacke weg gerichtet. Damit wird der Schieber 11 und sohin seine Werkzeugwirkfläche 8 in der Nebenentformungsrichtung 13b bewegt, was das standfeste und sichere Entformen selbst bei kurzen Bewegungen der Formbacken 5 ermöglicht.

Zu erkennen ist zudem in den Figuren 1 bis 3, dass diese Bahnabschnitte 18a, 18b gerade verlaufen.

Zudem weist die Schieberführung 12 eine an der Formbacke 5 vorgesehene Schieberführungsleiste 12b auf, an der der Schieber 11 verschiebbar gelagert ist, was eine präzise Führung der Werkzeugwirkfläche 8 schafft.

Die Backenführung 10 wird zudem von zwei parallel verlaufende Gleitführungen 10a, 10b ausgebildet, die je eine T-Führung darstellen. Die Backenführung 10 läuft der Formplatte 7a mit einem Innenwinkel α schräg zu.

Seitlich neben den der Backenführung 10, also damit auch neben den beiden Gleitführungen 10a, 10b ist jeweils eine Kulissenführung 14 angeordnet, was die Führung des Schiebers 11 verbessert.

Das Spritzgießwerkzeug 1 weist vier Formbacken 5 und vier Stützelemente 9 auf, die je mit einer Backenführung 10 eine Formbacke 5 der Formbacken 5 beweglich lagern, wobei die vier Backenführungen 10 einen gleichen Innenwinkel α zur Formplatte 7a aufweisen, was nicht näher dargestellt worden ist.

Die Werkzeugwirkfläche 20 kann mithilfe von zwei Anschlägen 19, 20 genau positioniert werden, da der Schieber 11 bei geschlossenem Spritzgießwerkzeug 1 an dies anschlägt, wie dies in Fig. 1b zu erkennen ist, wobei im Vergleich zum nach Fig. 1a dargestellten Schnitt, in Fig. 1b ein Schnitt mitten durch den Schieber 11 zeigt.

Die beiden Anschlägen 19, 20 arretieren den Schieber 11 an der Schieberführung 12, was formgenaue Spritzgießteile 2 sichergestellt. Zudem entlastet der erste Anschlag 19 die Kulissenführung mechanisch, was die Standfestigkeit des Spritzgießwerkzeugs 1 erhöht.

Von den beiden Anschlägen 19, 20 sind der erste Anschlag 19 stützelementseitig und der zweite Anschlag 20 formbackenseitig vorgesehen. Der erste Anschlag 19 wird von einem Keil 21 ausgebildet, der zwischen Stilelement 9 und Formplatte 7a und unterhalb der Kulissenführung 16 angeordnet ist. Der zweite Anschlag 20 wird von der Formbacke 5 ausgebildet.

Die Anschlagflächen 19a, 20a der beiden Anschläge 19, 20 sind verschieden geneigt verlaufend. So weist der erste Anschlag 19 eine Anschlagfläche 19a auf, die unter einem spitzen, insbesondere 70 Grad aufweisenden, Innenwinkel β relativ zur Führungsachse der Schieberführung 12 verläuft. Vorzugsweise beträgt diese Innenwinkel β im Wesentlichen 70 Grad. Dies erleichtert ein Vorbeibewegen des Schiebers 11 beim Öffnen des Spritzgießwerkzeugs 1.

Die Anschlagfläche 20a des zweiten Anschlags 20 verläuft normal (90 Grad) relativ zur Führungsachse 12a der Schieberführung 12, was die Konstruktion vereinfacht.

Zudem liegt diese Führungsachse 12a in Nebenentformungsrichtung 13b.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Spritzgießwerkzeug (1) zur Herstellung eines zumindest einen Hinterschnitt (2a) aufweisenden Spritzgießteils (2), mit mindestens einer Kavität (4) zur Ausbildung des Spritzgießteils (2), mit mindestens einer Formbacke (5), die die Kavität (4) zumindest abschnittsweise begrenzt und dort eine Werkzeugwirkfläche (8) für den Hinterschnitt (2a) am Spritzgießteil (2) aufweist, mit einer Formplatte (7a), mit einem mit der Formplatte (7a), insbesondere fest, verbunden Stützelement (9), und mit mindestens einer, insbesondere linearen, Backenführung (10), die zwischen dem Stützelement (9) und der Formbacke (5) vorgesehen ist und die Formbacke (5) gegenüber der Formplatte (7a) beweglich lagert, **dadurch gekennzeichnet, dass** die Formbacke (5) einen die Werkzeugwirkfläche (8) aufweisenden, insbesondere ausbildenden, Schieber (11) und eine, insbesondere lineare, Schieberführung (12) aufweist, an der der Schieber (11) an der Formbacke (5) zur Bewegung der Werkzeugwirkfläche (8), insbesondere in einer Nebenentformungsrichtung (13b) des Spritzgießwerkzeugs (1), beweglich gelagert ist, und dass das Spritzgießwerkzeug (1) zumindest eine Kulissenführung (14) zwischen Stützelement (9) und Schieber (11) zu dessen Bewegung entlang der Schieberführung (12) aufweist.

2. Spritzgießwerkzeug nach Anspruch 1, **dadurch gekennzeichnet, dass** die Kulissenführung (14) einen schieberseitigen Kulissenstein (15) und eine stützelementseitige Kulisse (16) mit einer Kulissenbahn (17) aufweist, in der der Kulissenstein (15) zur Bewegung des Schiebers (11) entlang der Schieberführung (12) geführt ist.

3. Spritzgießwerkzeug nach Anspruch 2, **dadurch gekennzeichnet, dass** die Kulissenbahn (17) langgestreckt ist und/oder dass zwei gegenüberliegende Längsränder die Kulissenbahn (17) definieren.

4. Spritzgießwerkzeug nach Anspruch 2 oder 3, **dadurch gekennzeichnet, dass** die Kulissenbahn (17) mehrere zueinander geneigt verlaufende Bahnabschnitte (18a, 18b) aufweist.

5. Spritzgießwerkzeug nach Anspruch 4, **dadurch gekennzeichnet, dass** von den Bahnabschnitten (18a, 18b) ein erster, insbesondere horizontal gesehen unterster, Bahnabschnitt (18a) parallel zur Führungsrichtung (10a) der Backenführung (10) und ein horizontal gesehen darüberliegender zweiter, insbesondere direkt an den ersten Bahnabschnitt (18a) anschließender, Bahnabschnitt (18b) zu dieser Führungsrichtung (10a) geneigt und von der Formbacke (5) weg gerichtet verläuft, um damit die Werkzeugwirkfläche (8), insbesondere in der Nebenentformungsrichtung (13b), zu bewegen.

6. Spritzgießwerkzeug nach Anspruch 4 oder 5, **dadurch gekennzeichnet, dass** die Bahnabschnitte (18a, 18b) gerade verlaufen.

7. Spritzgießwerkzeug nach einem der Ansprüche 1 bis 6, **dadurch gekennzeichnet, dass** die Schieberführung (12) eine an der Formbacke (5) vorgesehene Schieberführungsleiste (12b) aufweist, an der der Schieber (11) verschiebbar gelagert ist.

8. Spritzgießwerkzeug nach einem der Ansprüche 1 bis 7, **dadurch gekennzeichnet, dass** die Backenführung (10) zumindest eine Gleitführung, insbesondere mehrere parallel verlaufende Gleitführungen (10a, 10b), insbesondere T-Führungen, aufweist.

9. Spritzgießwerkzeug nach einem der Ansprüche 1 bis 8, **dadurch gekennzeichnet, dass** seitlich neben der Backenführung (10) jeweils eine Kulissenführung (14) angeordnet ist.

10. Spritzgießwerkzeug nach einem der Ansprüche 1 bis 9, **dadurch gekennzeichnet, dass** die Backenführung (10) der Formplatte (7a) schräg zuläuft und/oder dass sich die Schieberführung (12) normal zur Hauptentformungsrichtung (13a) des Spritzgießwerkzeug (1) längserstreckt.

11. Spritzgießwerkzeug nach einem der Ansprüche 1 bis 10, **dadurch gekennzeichnet, dass** das Spritzgießwerkzeug (1) vier Formbacken (5) und vier Stützelemente (9) aufweist, die je eine Formbacke (5) der Formbacken (5) mit einer Backenführung (10) beweglich lagern, wobei die vier Backenführungen (10), insbesondere einen gleichen, Innenwinkel (α) zur Formplatte (7a) aufweisen.

12. Spritzgießwerkzeug nach einem der Ansprüche 1 bis 11, **dadurch gekennzeichnet, dass** das Spritzgießwerkzeug (1) zumindest einen Anschlag (19, 20) aufweist, an den der Schieber (11) bei geschlossenem Spritzgießwerkzeug (1) anschlägt, wobei ein erster Anschlag (19) des zumindest einen Anschlags (19, 20) stützelementseitig und/oder ein zweiter Anschlag (20) des zumindest einen Anschlags (19, 20) formbackenseitig vorgesehen ist oder sind.

13. Spritzgießwerkzeug nach Anspruch 12, **dadurch gekennzeichnet, dass** der erste Anschlag (19) eine Anschlagfläche (19a) aufweist, die unter einem spitzen, insbesondere 70 Grad aufweisenden, Innenwinkel (β) relativ zur Führungsachse der Schieberführung (12) verläuft und/oder dass der zweite Anschlag (20) eine Anschlagfläche (20a) aufweist, die normal relativ zur Führungsachse (12a) der Schieberführung (12) verläuft.

14. Spritzgießmaschine mit einem Spritzgießwerkzeug (1) nach einem der Ansprüche 1 bis 13.

15. Verfahren zur Herstellung eines Spritzgießteils (2) mit einem Spritzgießwerkzeug (1) nach einem der Ansprüche 1 bis 13 oder mit einer Spritzgießmaschine nach Anspruch 14, bei dem beim Entformen des Spritzgießteils (2) der Schieber (11) an der Formbacke (5) über eine Kulissenführung (14) relativ zur Formbacke (5) bewegt wird.
